# FASCICULE DE BREVET EUROPEEN

(11) **EP 0 586 299 B1**
(45) Date de publication et mention de la délivrance du brevet: **06.12.1995**
(21) Numéro de dépôt: 93402130.4
(22) Date de dépôt: 01.09.1993
(51) Int. Cl.: B23Q 1/26

(54) **Bouchon obturateur, notamment pour l'occultation des trous de plateaux métalliques**
Dichtungsverschluss, insbesondere zum Abschirmen eines Lochs in eine Metallplatte
Sealing cap, specially for covering a hole in a metal plate

(30) Priorité: 04.09.1992 FR 9210562
(43) Date de publication de la demande: 09.03.1994
(73) Titulaire: Carossino, André, F-78430 Louveciennes (FR)
(72) Inventeur: Carossino, André, F-78430 Louveciennes (FR)
(74) Mandataire: Keib, Gérard

(56) Documents cités:
- EP-A- 0 389 330
- DE-A- 3 812 505
- US-A- 2 968 375

## Description

L'invention concerne un bouchon obturateur pour l'occultation de trous, notamment pour masquer les alésages non utilisés des plaques perforées servant pour la fixation des organes de bridage de pièces à usiner.

Il est usuel d'utiliser, sur les machines à commande numérique ou sur les centres d'usinage, des plateaux métalliques s'apparentant à des blocs perforés dont les trous sont généralement constitués par des alésages précis prolongés par des orifices taraudés. Ces alésages ont un entr'axe rigoureusement calibré puisqu'ils servent au positionnement et à la fixation d'organes servant eux-mêmes au bridage de pièces à usiner.

En cours de production, seule une partie des trous taraudés est utilisée pour le bridage, les autres trous restent à l'état libre. Or, on a observé que, au cours de l'usinage, les copeaux et le lubrifiant se répandent partout et engorgent en particulier les trous restés libres. Ceci présente un grave inconvénient car le nettoyage des trous est malaisé et l'on risque la projection dangereuse de copeaux si on utilise l'air comprimé pour les chasser des trous.

Pour remédier à ces inconvénients, on a donc créé des bouchons obturateurs destinés à masquer les trous non utilisés pour le bridage. Ceux-ci sont réalisés en métal, en caoutchouc ou en matière plastique. Ils sont généralement constitués par une tête d'obturation prolongée par un corps fileté, avec ou sans joint torique d'étanchéité, dont le filetage correspond au pas du taraudage des trous des plateaux perforés. Lorsque le bouchon comporte une tête d'appui en forme de clapet, celle-ci vient reposer sur le chanfrein existant à l'entrée de chaque trou. Pour procéder au vissage de tous ces bouchons obturateurs, on prévoit, sur la face extérieure de la tête, une cavité hexagonale destinée à recevoir une clé de type Allen. L'inconvénient cité plus haut demeure car les copeaux ont tendance à se loger dans cette cavité, de sorte qu'il est impossible de passer la main sans danger sur le plateau pour s'assurer de sa netteté. Il faut, là encore, dégager les copeaux avec de l'air comprimé et parfois même, à l'aide d'un outil, en raison de l'étroitesse de la cavité. En outre, le temps de pause et de retrait de centaines de ces bouchons obturateurs, qu'il faut visser et dévisser, est incompatible avec la productivité exigée dans les centres d'usinage.

Pour remédier encore à ces inconvénients et en particulier, pour éviter ces multiples manipulations et opérations journalières de nettoyage, on a eu recours à des bouchons d'obturation dont la tête était parfaitement lisse (sans cavité ni aspérité) et dans ce cas, ledit bouchon était formé d'une bague pourvue d'une gorge annulaire pour recevoir un joint torique, ladite bague étant lisse et étant prolongée par une lèvre d'appui destinée à venir reposer sur le chanfrein d'entrée du trou à obturer. Dans ce cas, les bouchons d'obturation n'étaient plus vissés, mais simplement engagés à force et leur retrait se faisait à l'aide d'un simple aimant. Malheureusement, là encore, ce type de réalisation a vite montré ses défaillances car, on s'est rendu compte avec l'expérience que leur extraction devenait impossible en raison de la limaille véhiculée par le lubrifiant qui s'infiltrait entre le bouchon et le trou et venait colmater le joint torique. Ainsi, en pratique, le retrait, par aimantation des bouchons devenait impossible et, en présence de tête à surface lisse, le retrait devenait particulièrement laborieux.

L'EP-A-0 389 330 décrit un bouchon constitué de deux éléments coaxiaux, mobiles l'un par rapport à l'autre, son élément d'obturation étant formé d'une tête de clapet prolongée axialement par un moyeu central et son élément d'étanchéité étant monté coulissant sur ce moyeu.

Ce bouchon présente également les inconvénients exposés ci-dessus.

L'invention a pour but de remédier à ces inconvénients et concerne un bouchon d'obturation à tête lisse mais, pouvant aisément, de par sa constitution, être mis en place et extrait sans aucune difficulté et sans aucune force de traction.

A cet effet, le bouchon obturateur selon l'invention qui est constitué de deux éléments coaxiaux, mobiles l'un par rapport à l'autre, l'élément d'obturation proprement dit étant formé d'une tête de clapet prolongée par une tige, l'élément d'étanchéité, coulissant sur cette tige, est caractérisé en ce que cet élément d'étanchéité est constitué d'une bague circulaire pourvue d'un joint, ladite tête étant constamment sollicitée en direction de l'élément d'étanchéité par un organe élastique.

Selon un mode de réalisation préférentiel, l'organe élastique de rappel est formé d'un ressort en spirale entourant la tige de l'élément d'obturation et venant en butée par une des deux extrémités sur la bague d'étanchéité, et par son autre extrémité, dans le fond d'une cage immobilisée axialement sur ladite tige.

La cage du ressort est de préférence, fixée sur la tige de l'élément d'obturation par un circlips engagé dans une gorge annulaire ménagée à l'extrémité de ladite tige.

D'autres caractéristiques et avantages ressortiront de la description ci-après et des dessins annexés dans lesquels :
- la figure 1 est une vue en coupe du bouchon obturateur selon l'invention,
- la figure 2 est une vue en coupe axiale du bouchon obturateur après mise en place dans l'un des trous d'une plaque perforée servant à la fixation des organes de bridage,
- la figure 3 est une vue en coupe du bouchon d'obturation au cours de l'opération de retrait.

Comme indiqué plus haut, le bouchon obturateur selon l'invention est constitué essentiellement de deux parties distinctes, coaxiales l'une à l'autre, à savoir : l'élément d'obturation proprement dit 1, et l'élément d'étanchéité 2.

L'élément d'obturation est constitué d'une tête 11 en forme de clapet présentant une surface extérieure 12 plane et lisse, cette tête se raccordant à la tige axiale 13 par une collerette conique 14 et un épaulement annulaire 15. L'extrémité de la tige 13 est pourvue d'une gorge annulaire 16 destinée à recevoir un circlips 3 servant d'organe d'immobilisation axial à une cage de ressort 4 concentrique à la tige 13. Cette cage 4, en forme de coupelle, reçoit un ressort spiralé 5 entourant la tige 13 et venant respectivement en appui par son extrémité 51 sous la face d'appui 21 de la bague d'étanchéité 2, et par son autre extrémité 52, dans le fond de la cage 4.

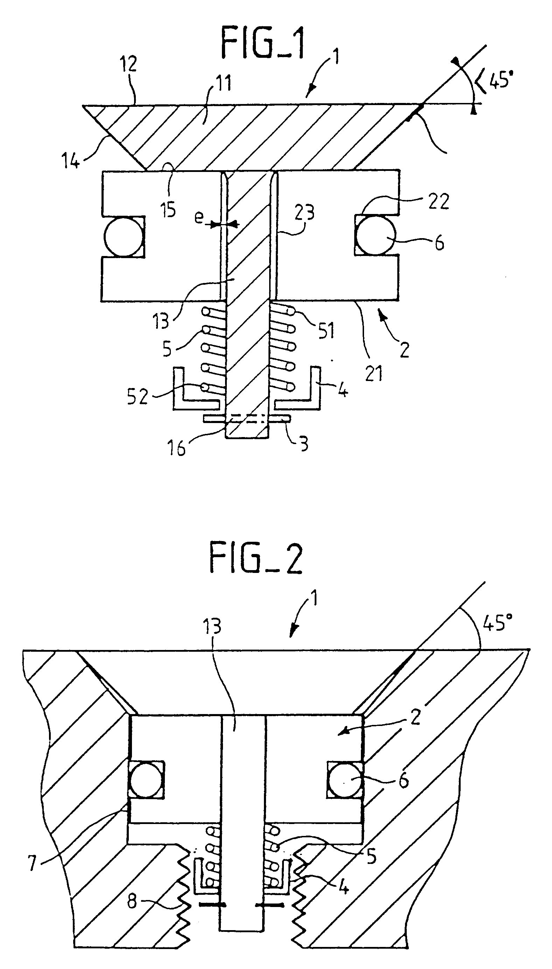

La bague d'étanchéité 2 est de forme circulaire et comporte une gorge annulaire 22 dans laquelle est logé un joint torique 6 destiné à assurer l'étanchéité entre le bouchon et l'orifice 7, taraudé ou non (figure 2). Le diamètre de cette bague est sensiblement égal à celui de l'orifice 7 pour favoriser le guidage du bouchon d'obturation lors de sa mise en place. Bien entendu, le diamètre de la cage 4 est quant à lui inférieur à celui du taraudage 8 prolongeant le trou de fixation afin de pouvoir pénétrer dans cet orifice sans heurt.

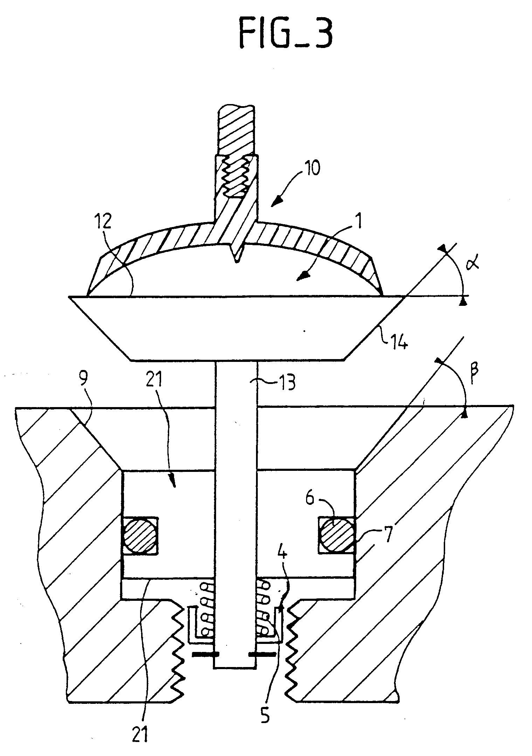

Comme visible en figure 3, l'alésage 7 à obturer comporte un chanfrein d'entrée 9 dont la conicité correspond sensiblement à celle de la collerette conique 14 de l'élément d'obturation 1, à la différence toutefois que l'angle α de ladite collerette est légèrement inférieur à l'angle β du chanfrein 9 de manière à ce que le contact entre ces deux parties coniques se fasse, de préférence, sur le bord supérieur de la collerette conique 14, c'est-à-dire en une zone la plus proche possible de la surface extérieure lisse 12. Enfin, la bague d'étanchéité 2 comporte un'orifice axiale 23 dont le diamètre est légèrement supérieur à celui de la tige axial 13 afin de ménager un jeu "e" permettant de rattraper l'éventuel défaut d'excentricité qu'il pourrait y avoir entre la collerette conique 14 de l'élément d'obturation et le siège chanfreiné 9 de l'orifice 7 à obturer.

Le bouchon d'obturation selon l'invention est engagé à force dans l'alésage 7 à occulter et, comme visible en figure 2, la bague d'étanchéité 2, est appliquée constamment sous la face inférieure 15 de la tête 11 de l'élément d'obturation par le ressort 5 travaillant en compression. Dans cet état, l'étanchéité est rigoureusement assurée, d'une part, par le contact précis de la collerette conique de l'élément d'obturation 1 sur le siège 9 de l'alésage 7 (dû notamment à la différence de conicité entre les deux surfaces) ainsi que par le joint torique 6 qui s'écrase contre la paroi verticale interne de l'alésage 7.

Le retrait du bouchon obturateur s'effectue aisément par succion, par exemple par un organe ventouse 10 (figure 3) que l'on vient simplement appliquer sur la surface 12 de l'élément d'obturation. Dès que l'accouplement par succion a eu lieu, il suffit d'exercer une légère traction sur la ventouse 10 pour entraîner dans un mouvement ascensionnel l'élément d'obturation 1 qui coulisse librement à l'intérieur de la bague d'étanchéité 2 restant en place. La course de l'élément d'obturation entraîne la compression du ressort 5 au cours du déplacement de la cage 4 dans laquelle viennent se loger avec jeu les spires superposées du ressort, comme cela est parfaitement visible en figure 3. Dès que la cage vient en butée sous la face inférieure 21 de la bague d'étanchéité, on procède au retrait définitif du bouchon en soulevant de deux doigts la tête 11 en forme de clapet, ce qui entraîne, bien évidemment, la bague de guidage, et par conséquent, l'ensemble du bouchon. Ainsi, la résistance à vaincre lors de l'action de la ventouse 10 est faible puisqu'elle correspond seulement à la résistance du petit ressort spiralé 5. Ensuite, dès que la tête de l'élément d'obturation est en saillie, l'opérateur peut, bien entendu, la saisir pour extraire l'ensemble.

L'avantage essentiel de ce type de bouchon d'obturation réside dans le fait qu'il peut être mis en place sans tâtonnement en une ou deux secondes, et que son retrait ne nécessite pas beaucoup plus de temps, même si de la limaille s'est infiltrée entre le bouchon et l'alésage et que le joint est plus ou moins grippé. L'extraction est toujours aisée et rapide quelles que soient les conditions d'utilisation. En outre, ce type de bouchon associe les avantages précités au fait que sa tête est lisse et qu'il ne nécessite aucune opération de nettoyage, écartant ainsi le danger de projection de copeaux par utilisation de l'air comprimé.

Bien entendu, l'usage d'un tel bouchon obturateur n'est pas limité à l'occultation des trous de plaques perforées réservées au bridage de pièces à usiner. Il pourrait tout aussi bien être utilisé pour masquer provisoirement les orifices inutilisés d'autres éléments, métalliques ou non, tels que des montants de meubles de bureaux, des crémaillères ou éléments de gondoles servant à la constitution modulaire de présentoirs ou d'étagères bien connus dans les magasins. C'est pourquoi l'invention n'est pas limitée au type d'éléments auquel s'applique le bouchon obturateur mais porte essentiellement sur la constitution et le fonctionnement du bouchon.

## Revendications

1. Bouchon obturateur pour l'occultation des trous de plateaux métalliques, en particulier ceux des plaques perforées utilisées pour la fixation des organes servant au bridage de pièces à usiner, constitué de deux éléments coaxiaux, mobiles l'un par rapport à l'autre : un élément d'obturation (1), formé d'une tête de clapet (11) prolongée axialement par une tige (13), et un élément d'étanchéité (2), coulissant sur cette tige, caractérisé en ce que cet élément d'étanchéité est constitué d'une bague circulaire pourvue d'un joint (6), ladite tête étant constamment sollicitée en direction de l'élément d'étanchéité par un organe élastique (5).

2. Bouchon selon la revendication 1, caractérisé en ce que l'organe élastique (5) est constitué d'un ressort en spirale entourant de façon concentrique la tige (13) de l'élément d'obturation (1) et venant respectivement en butée, par l'une de ses extrémités (51), sous la face inférieure (21) de la bague d'étanchéité (2), et par son autre extrémité dans le fond d'une cage (4) immobilisée axialement sur cette tige (13).

3. Bouchon selon la revendication 2, caractérisé en ce que la cage (4) est fixée sur la tige (13) de l'élément d'obturation (1) par un circlips (3) engagé dans une gorge annulaire (16) de ladite tige.

4. Bouchon selon les revendications 2 et 3, caractérisé en ce que la cage (4) est formée d'une coupelle circulaire, ouverte en direction de la bague d'étanchéité (2), la hauteur de cette coupelle étant suffisamment haute pour recevoir avec jeu, l'ensemble des spires superposées du ressort (5) après compression.

5. Bouchon selon la revendication 1, caractérisé en ce que le diamètre intérieur (23) de la bague d'étanchéité (2) est légèrement supérieur au diamètre de la tige (13) de l'élément d'obturation (1) pour ménager un jeu servant au rattrapage d'un éventuel défaut d'excentration de la collerette conique (14) de la tête de clapet (11) par rapport au siège chanfreiné (9) du trou (7) à occulter.

6. Bouchon selon l'une quelconque des revendications de 1 à 5, caractérisé en ce que la tête (11) du clapet de l'élément d'obturation (1) est lisse (sans cavité ni aspérité) pour pouvoir être associée à un organe de succion (10) de type ventouse.

7. Bouchon selon la revendication 1, caractérisé en ce que l'angle de conicité α de la tête de clapet (11) de l'élément d'obturation est inférieur à celui de l'angle β formé par le chanfrein (9) du trou à occulter.

## Claims

1. Closure plug for covering holes in metal plates, in particular those in perforated plates used for fixing devices used for clamping parts to be machined, consisting of two coaxial members, which can move with respect to one another: a closure member (1), formed from a valve head (11) extended axially by a stem (13), and a sealing member (2) sliding on this stem, characterized in that this sealing member consists of a circular ring provided with a joint (6), the said head constantly being forced in the direction of the sealing member by an elastic component (5).

2. Plug according to Claim 1, characterized in that the elastic component (5) consists of a spiral spring surrounding the stem (13) of the closure member (1) concentrically and coming respectively to bear, through one of its ends (51), on the bottom face (21) of the sealing ring (2), and through its other end in the bottom of a casing (4) immobilized axially on this stem (13).

3. Plug according to Claim 2, characterized in that the casing (4) is fixed to the stem (13) of the closure member (1) by a circlip (3) engaged in an annular groove (16) in the said stem.

4. Plug according to Claims 2 and 3, characterized in that the casing (4) is formed from a circular cup, open in the direction of the sealing ring (2), the height of this cup being sufficiently high for receiving, with clearance, all the superimposed coils of the spring (5) after compression.

5. Plug according to Claim 1, characterized in that the internal diameter (23) of the sealing ring (2) is slightly greater than the diameter of the stem (13) of the closure member (1) in order to provide clearance serving to take up any eccentricity error in the conical flange (14) of the valve head (11) with respect to the bevelled seat (9) of the hole (7) to be covered.

6. Plug according to any one of Claims 1 to 5, characterized in that the head (11) of the valve of the closure member (1) is smooth (without cavities or roughness) so that it can be associated with a suction device (10) of the sucker type.

7. Plug according to Claim 1, characterized in that the angle of taper α of the valve head (11) of the closure member is smaller than that of the angle β formed by the bevel (9) of the hole to be covered.

## Patentansprüche

1. Verschlußstück zum Verschließen von Öffnungen in Metallplatten, insbesondere in mit Öffnungen versehenen Platten, welche zur Fixierung von Einrichtungen genutzt werden, die zum Spannen von Werkstücken dienen, wobei das Verschlußstück zwei bezüglich einander bewegliche, koaxiale Elemente umfaßt: ein Verschlußelement (1), welches von einem Ventilkopf (11) gebildet wird, welcher axial durch einen Schaft (13) verlängert ist, und ein Dichtelement (2), welches auf dem Schaft gleitbeweglich angeordnet ist, **dadurch gekennzeichnet**, daß das Dichtelement von einem kreisförmigen Ring gebildet wird, welcher mit einer Dichtung (6) versehen ist, und daß der Kopf konstant in Richtung des Dichtelements mittels einer elastischen Einrichtung (5) beaufschlagt ist.

2. Verschlußstück nach Anspruch 1, **dadurch gekennzeichnet**, daß die elastische Einrichtung (5) von einer Spiralfeder gebildet wird, welche konzentrisch den Schaft (13) des Verschlußelements (1) umgibt und über eines der Enden in Anlageberührung an der unteren Fläche (21) des Dichtrings (2) kommt, und das andere Ende zur Anlage auf dem Boden eines Gehäuses (4) kommt, welches axial unbeweglich am Schaft (13) festgelegt ist.

3. Verschlußstück nach Anspruch 2, **dadurch gekennzeichnet**, daß das Gehäuse (4) an dem Schaft (13) des Verschlußelements (1) mittels Sicherungsringen (3) festgelegt ist, welche in eine Ringnut (16) des Schafts eingreifen.

4. Verschlußstück nach Anspruch 2 und 3, **dadurch gekennzeichnet**, daß das Gehäuse(4) von einem schalenförmigen und kreisförmigen Teil gebildet wird, welches in Richtung des Dichtrings (2) offen ist, und daß die Höhe dieses schalenförmigen Teils so ausreichend groß bemessen ist, daß mit Spiel die Anordnung der übereinandergelegten Windungen der Feder (5) nach dem Zusammendrücken aufgenommen werden kann.

5. Verschlußstück nach Anspruch 1, **dadurch gekennzeichnet**, daß der Innendurchmesser (23) des Dichtrings (2) geringfügig größer als der Durchmesser des Schafts (13) des Verschlußelements (1) bemessen ist, um ein Spiel bereitzustellen, das für eine Nachstellung einer eventuell auftretenden Mittelpunktsverlegung des konischen Flansches (14) des Kopfes des Ventils (11) bezüglich des abgeschrägten Sitzes (9) der zu verschließenden Öffnung (7) dient.

6. Verschlußstück nach einem der Ansprüche 1 bis 5, **dadurch gekennzeichnet**, daß der Kopf (11) des Ventils des Verschlußelements (1) glatt geschliffen ist (weder einen Hohlraum noch eine Unebenheit hat), um mit einer Saugeinrichtung (10) der Entlüftungsbauart verbunden zu werden.

7. Verschlußstück nach Anspruch 1, **dadurch gekennzeichnet**, daß der Konizitätswinkel α des Kopfes des Ventils (11) des Verschlußelementes kleiner als der Konizitätswinkel β ist, welcher von der Abschrägung (9) der zu verschließenden Öffnung gebildet wird.
